# FASCICULE DE BREVET EUROPEEN

(11) **EP 0 403 342 B1**
(45) Date de publication et mention de la délivrance du brevet: **03.08.1994**
(21) Numéro de dépôt: 90401573.2
(22) Date de dépôt: 08.06.1990
(51) Int. Cl.: G02B 27/00

(54) **Dispositif de visualisation pour viseur de casque ergonomique à grand champ d'observation**
Sichtvorrichtung für ein ergonomisches Helmvisier mit weitem Blickfeld
Visual device for ergonomic helmet visor with great observation field

(30) Priorité: 14.06.1989 FR 8907901
(43) Date de publication de la demande: 19.12.1990
(73) Titulaire: THOMSON-CSF, 75008 Paris (FR)
(72) Inventeur: Monnier, Laurent, F-92045 Paris la Défense (FR); Gerbe, Jean-Pierre, F-92045 Paris la Défense (FR)
(74) Mandataire: Benoit, Monique

(56) Documents cités:
- EP-A- 0 077 193
- EP-A- 0 119 128
- EP-A- 0 240 374
- EP-A- 0 288 365

## Description

La présente invention a pour objet un dispositif permettant la réalisation de viseurs de casque ergonomiques avec un grand champ d'observation et un très bon rendement énergétique, dans lequel une image lumineuse collimatée est observée en superposition sur la vision du paysage extérieur.

L'optique collimatrice renvoie à l'infini l'image lumineuse correspondant aux données à collimater; ceci se traduit par l'absence d'effort d'accommodation pour l'oeil de l'observateur et un grand confort visuel. En utilisation tête haute conventionnelle à bord d'aéronefs, l'image lumineuse est renvoyée par une optique de combinaison vers l'observateur. Cette optique est traversée par le rayonnement provenant du paysage extérieur. Ainsi l'observateur voit, en superposition sur le paysage, l'image lumineuse collimatée correspondant, par exemple, à une image synthétique qui traduit des données de navigation aérienne.

Dans la technique antérieure, on connait par la demande de brevet français publiée n°2.593.932, un dispositif de visualisation comportant un ensemble optique de collimation et de combinaison groupant un miroir sphérique holographique utilisé sur l'axe pour observer, à partir du centre de ce miroir, une image lumineuse collimatée, et un miroir semi-transparent incliné sur ledit axe correspondant à la direction normale de vision pour l'observation de l'image collimatée superposée au paysage extérieur et un générateur de l'image lumineuse à collimater dont le rayonnement parvient au miroir semi-transparent. Ce miroir réfléchit le rayonnement vers le miroir sphérique, côté concave, ce dernier le renvoyant à nouveau vers le miroir semi-transparent qui le transmet en direction de l'observateur. Ce dispositif est caractérisé en ce que le rayonnement de l'image lumineuse traverse d'abord le miroir sphérique sur lequel il tombe incident côté convexe, avec une incidence en dehors de la plage d'incidences pour laquelle le miroir est déterminé sélectif à la réflexion, ledit rayonnement traversant ce miroir sphérique en direction du miroir semi-transparent. Ledit ensemble optique est disposé dans un milieu transparent formant une lame à faces parallèles qui constituent un système stigmatique pour l'infini. Selon une forme de réalisation préférée, plus particulièrement, destinée à la réalisation de viseurs de casque ergonomique, le générateur d'images et le point d'observation sont disposés d'un même côté par rapport à l'ensemble optique et ce dernier est complété par un miroir de renvoi pour réfléchir le rayonnement du générateur et son axe optique vers la face convexe du miroir sphérique.

Le but de l'invention est de réaliser un dispositif de visualisation avec un champ identique à celui obtenu par le dispositif décrit et revendiqué dans la demande de brevet français précitée, et un rendement énergétique supérieur dans le cas d'une utilisation du dispositif pour réaliser un viseur de casque, tout en améliorant l'ergonomie du système.

La présente invention a donc pour objet un dispositif de visualisation pour viseur de casque ergonomique, comportant un ensemble optique de collimation et de combinaison avec un générateur d'images situé du même côté que le point d'observation ledit ensemble optique de collimation et de combinaison étant pourvu d'un miroir holographique ou dichroïque et d'un miroir semi-transparent inclus dans une lame transparente à faces parallèles, et caractérisé en ce que la lame à faces parallèles comporte, dans sa face avant, côté point d'observation, une surface biseautée disposée face au générateur d'image de façon à être orthogonale à l'axe optique dudit générateur d'image et inclinée par rapport à la face arrière, côté scène extérieure, de la lame transparente, de manière à permettre une réflexion totale sur cette face arrière du rayonnement issu du générateur d'image.

L'invention est en outre remarquable par les points suivants :
- l'axe optique du miroir sphérique coïncide avec l'axe de visée,
- la lame à faces parallèles est avantageusement constituée de quatre éléments en verre ou en matériau organique transparent, conformés pour venir s'ajuster les uns avec les autres, à savoir un premier élément dont l'une des faces constitue une face latérale de la lame à faces parallèles et dont l'autre face est le support du miroir plan; un second élément intermédiaire en appui sur la face plane du premier élément et dont l'autre face est de configuration sphérique de façon à pouvoir supporter le miroir sphérique; un troisième élément de configuration convexe sur l'une de ses faces est destiné à venir en appui sur le second élément et dont la seconde face est plane et correspond à la seconde face latérale de la lame à face parallèle; et un quatrième élément qui prolonge les faces latérales de la lame à faces parallèles est taillé en biseau pour permettre au pinceau lumineux issu du générateur d'images de sortir en incidence normale de la lame à faces parallèles. Selon une autre caractéristique de l'invention, ces quatre éléments sont réalisés en un même matériau transparent présentant les caractéristiques de réfraction et de résistance mécanique appropriées à l'usage.

De ce qui précède , on voit que la modification apportée au système décrit dans le document précité réside dans le cheminement différent du rayonnement lumineux issu du générateur d'images, dans l'ensemble de collimation et de combinaison. En fait, le rayonnement lumineux de l'image entre dans un milieu transparent dans lequel sont inclus le miroir semi-transparent ainsi que le miroir sphérique holographique ou dichroïque, se réfléchit sur une face plane dudit milieu par réflexion totale, c'est-à-dire sans perte énergétique, traverse le miroir sphérique sur lequel il tombe incident côté convexe en dehors de la plage d'incidence de réflexion, parvient au miroir semi-transparent, lequel le réfléchit vers le miroir sphérique côté concave, ce dernier le renvoyant à nouveau vers le miroir semi-transparent qui le transmet en direction de l'observateur. Enfin il sort du milieu transparent avant son arrivée à l'oeil de l'observateur. Avantageusement, le milieu transparent est constitué par une lame à faces parallèles, qui constitue un système stigmatique pour l'infini.

Les améliorations apportées par ce dispositif lors d'une utilisation pour la réalisation de viseurs de casques ergonomiques sont une meilleure compacité du système car il a été possible de supprimer le miroir de renvoi additionnel, une plus grande facilité de mise en place car seule une lame à faces parallèles doit être prévue. A ces améliorations ergonomiques, est également associée une meilleure transmission de la voie paysage et de la voie tube.

D'autres avantages et caractéristiques de la présente invention apparaîtront mieux à la lecture de la description non limitative suivante d'un mode de réalisation de dispositif de visualisation pour viseur de casque ergonomique à grand champ d'observation, en référence au dessin annexé, dans lequel :
La figure 1 est une vue schématique du dispositif de visualisation de l'invention;
La figure 2 est une vue illustrant en particulier le cheminement des rayonnements dans le dispositif de la figure 1;
La figure 3 est une vue schématique de la lame à faces parallèles mise en oeuvre dans la présente invention.

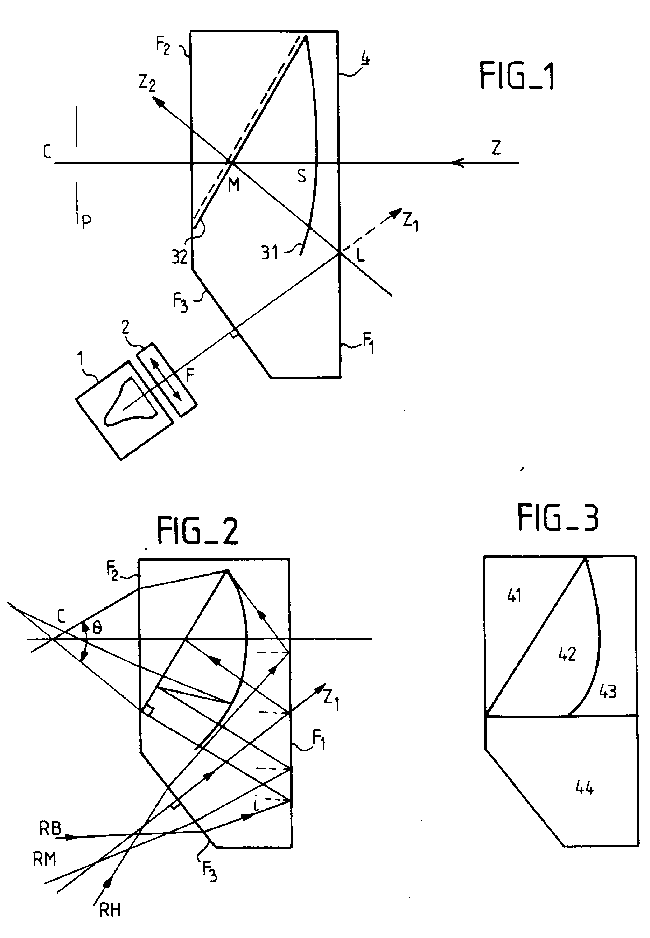

En, se reportant plus précisément à la figure 1, on voit que le dispositif de visualisation comporte un ensemble imageur ou générateur d'images, 1,associé à un dispositif optique relais destiné à faire coïncider l'image lumineuse avec la surface focale du miroir sphérique,31. L'ensemble optique de collimation et de combinaison est constitué par le miroir sphérique,31, et le miroir semi-transparent 32. Cet ensemble est disposé à l'intérieur d'une lame à faces parallèles. L'axe Z1 représente l'axe optique du générateur d'image qui correspond au centre de l'image lumineuse. L'axe Z2 correspond à l'axe optique après réflexion totale sur la face F1 de la lame à faces parallèles,4. L'axe Z correspond à l'axe optique du miroir sphérique, 31, confondu avec l'axe optique du générateur d'images après réflexion sur la face F1 puis sur le miroir semi- transparent, et correspond également à la direction normale de vision pour un observateur placé en C, au centre du miroir sphérique, 31. On notera que la zone inférieure de la lame à faces parallèles,4,est biseautée de façon à former une zone plane F3 inclinée par rapport à la face F1 de façon à être orthogonale à l'axe Z1 et permettre la réflexion totale tel que spécifié précédemment.

On a représenté l'observateur par la pupille d'observation P, le trajet optique SC correspond au rayon R du miroir sphérique tandis que le trajet SM + ML + LF correspond à la distance focale du miroir sphérique c'est-à-dire à R/2. L'utilisation du miroir sphérique 31 sur l'axe Z limite les aberrations tout en permettant d'accroître considérablement le champ d'observation. Le rendement énergétique est en outre accru en effectuant une sélection holographique ou dichroïque des deux voies (sélection sur la longueur d'ondes et sur l'angle d'incidence).

En se référant plus particulièrement à la figure 2, l'angle ϑ représente le champ instantané de vision en site de l'image lumineuse collimatée. L'angle a représente sensiblement la valeur limite du rayon bas RB par rapport à l'axe Z1 du générateur d'image. En effet, ce rayon aboutit sur le miroir plan 32 avec une incidence normale et retourne vers le générateur d'images. L'axe Z1 tombe avec une incidence normale sur la face d'entrée F3 de la lame à faces parallèles 4 et ne subit pas de déviation angulaire au passage dans cette lame. Les angles d'incidence des rayons incidents sur la face F1 de la lame 4 sont supérieurs à l'angle limite qui permet la réflexion totale. La limite basse d'observation est donc déterminée pour l'angle de champ ϑ , soit par l'angle a correspondant à la bande d'incidence efficace de l'hologramme ou du dichroïque 31, soit par l'angle i qui limite la réflexion totale.

Les parcours optiques sont représentés pour les rayons bas RB et pour les rayons hauts RH, et pour un rayon quelconque RM illustrant le parcours général entre les éléments de l'ensemble optique de collimation et de combinaison. On notera que le schéma n'est pas établi à l'échelle et que les angles de réfraction ne sont pas critiques.

L'hologramme ou le dichroique déposés sur le dioptre sphérique 31 est efficace pour la bande spectrale des rayons lumineux du dispositif générateur d'images. Elle peut correspondre à une bande étroite située dans le vert. Les conditions sur les plages d'angle d'incidence sont telles que lorsque le rayonnement arrive du côté convexe du miroir sphérique 31, ce dernier doit être passant, les valeurs limites d'incidence dans ces conditions déterminant une première plage et telles qu'après réflexion sur le miroir plan semi-transparent, le rayonnement arrive du côté concave du miroir sphérique 31, ce dernier devant être sélectif et réfléchissant de façon à déterminer une seconde plage. Ces deux plages d'angle d'incidence sont distinctes. Ainsi l'hologramme ou le dichroique ne seront efficaces que dans la plage d'incidence sélectionnée pour la réflexion et pour la bande spectrale correspondant au générateur d'images.

Du point de vue énergétique, il n'y a pas de perte au niveau de la réflexion totale, et le rayonnement du paysage traverse en quasi-totalité le miroir 31, à l'exception du rayonnement inclus dans la bande spectrale sélectionnée pour la réflexion, le rayonnement du générateur d'images étant presque totalement réfléchi par le miroir sphérique 31. En conséquence, seules les pertes au niveau du miroir semi-transparent 32 sont à prendre en compte. En effet, le rayonnement image est d'abord réfléchi puis traverse le miroir 32 après réflexion sur le miroir 31, et le rayonnement du paysage est en partie éliminé par réflexion lors de la traversée du miroir 32. Le système a néanmoins un très bon rendement énergétique puisqu'il permet d'obtenir jusqu'à 25% de transmission énergétique sur la voie image et de l'ordre de 45% sur la voie paysage.

En se référant plus particulièrement à la figure 3, on voit que la lame à faces parallèles 4 est constituée de quatre éléments en verre ou en matériau organique transparent, qui sont conformés pour venir s'imbriquer les uns dans les autres. La référence numérique 41 représente un premier élément dont l'une des faces constitue une face latérale de la lame 4 et dont l'autre face est le support du miroir plan semi-transparent 32. En appui sur la face plane de l'élément 41, est prévu un second élément,42, intermédiaire et dont l'autre face est réalisée sphérique par usinage afin de pouvoir supporter le miroir 31. Un élément 43, conformé concave par usinage vient s'appuyer par cette face concave sur l'élément 42 tandis que sa seconde face est plane et correspond à la seconde face latérale de la lame à face parallèles 4. Un quatrième élément 44 prolonge les faces latérales de la lame à faces parallèles 4 et est taillé en biseau selon une inclinaison telle qu'elle permet à l'axe Z1 de sortir en incidence normale de la lame à faces parallèles 4 . Les quatre éléments sont avantageusement réalisés en un même matériau transparent.

Il est clair que l'invention n'est nullement limitée à la forme de réalisation décrite ci-dessus en référence au dessin annexé, mais qu'elle englobe toutes les modifications et variantes issues du même principe de base.

## Revendications

1. Dispositif de visualisation pour viseur de casque ergonomique à grand champ d'observation permettant la vision d'une image d'un générateur d'image en superposition avec celle d'un paysage extérieur, comportant un ensemble optique de collimation et de combinaison, avec le générateur d'image situé du même côté que le point d'observation, pourvu d'un miroir holographique ou dichroïque (31) et d'un miroir plan semi-transparent (32) inclus dans une lame transparente à faces parallèles (4), caractérisé en ce que ladite lame à faces parallèles (4) comporte dans sa face avant (F₂) côté point d'observation une surface biseautée (F₃) disposée face au générateur d'image, de façon à être orthogonale à l'axe optique dudit générateur d'image et inclinée par rapport à la face arrière (F₁), côté scène extérieure, de la lame transparente de manière à permettre une réflexion totale sur cette face arrière du rayonnement issu du générateur d'image.

2. Dispositif selon la revendication 1, caractérisé en ce que l'axe du miroir sphérique (31) coïncide avec l'axe de visée (Z).

3. Dispositif selon l'une quelconque des revendications 1 et 2, caractérisé en ce que la lame à faces parallèles est constituée de 4 éléments, à savoir :
- un premier élément (41) dont l'une des faces constitue une face latérale de la lame à faces parallèles (4) et dont l'autre face, plane, est le support du miroir plan semi-transparent (32) ;
- un second élément (42) venant en appui sur la face plane de l'élément (41) et dont l'autre face est de configuration sphérique pour supporter le miroir sphérique (31) ;
- un troisième élément (43) de configuration concave sur une face afin de venir en appui sur l'élément (42) et dont la seconde face est plane et correspond à la seconde face latérale de la lame à face parallèle (4) ; et
- un quatrième élément (44) prolongeant les faces latérales de la lame à faces parallèles (4) et qui est taillé en biseau selon une inclinaison telle qu'elle permet au rayonnement issu du générateur d'images de subir une réflexion totale dans la lame à faces parallèles (4).

4. Dispositif selon l'une quelconque des revendications 1 à 3, caractérisé en ce que la lame à faces parallèles est constituée en un verre ou un matériau transparent possédant les caractéristiques de réfraction et de résistance mécanique appropriées à l'usage.

## Patentansprüche

1. Anzeigevorrichtung für ein ergonomisches Helmsichtgerät mit großem Beobachtungsfeld, das die Betrachtung eines von einem Bildgenerator stammenden Bilds in Überlagerung mit dem Bild einer äußeren Landschaft erlaubt und eine optische Kollimations- und Kombinationseinheit enthält, wobei der Bildgenerator auf derselben Seite wie der Beobachtungspunkt liegt und die optische Kollimations- und Kombinationseinheit einen holographischen oder dichroitischen Spiegel (31) und einen ebenen halbtransparenten Spiegel (32) innerhalb eines transparenten Plättchens (4) mit parallelen Seiten aufweist, dadurch gekennzeichnet, daß das Plättchen (4) mit parallelen Seiten auf seiner Vorderseite (F2) auf der Seite des Beobachtungspunkts eine schräg abgeschnittene Oberfläche (F3) aufweist, die dem Bildgenerator gegenüberliegt, derart, daß sie senkrecht zur optischen Achse dieses Bildgenerators und geneigt bezüglich der rückwärtigen, zur äußeren Landschaft weisenden Seite (F1) des transparenten Plättchens geneigt verläuft, um eine Totalreflexion der vom Bildgenerator ausgehenden Strahlung an dieser rückwärtigen Seite zu erlauben.

2. Vorrichtung nach Anspruch 1, dadurch gekennzeichnet, daß die Achse des sphärischen Spiegels (31) mit der Sichtachse (Z) zusammenfällt.

3. Vorrichtung nach einem beliebigen der Ansprüche 1 und 2, dadurch gekennzeichnet, daß das Plättchen mit parallelen Seiten aus vier Elementen besteht, nämlich:
- einem ersten Element (41), dessen eine Fläche eine Seitenfläche des Plättchens (4) mit parallelen Seiten bildet und dessen andere, ebene Fläche ein Träger für den ebenen halbtransparenten Spiegel (32) ist,
- einem zweiten Element (42), das auf der ebenen Fläche des Elements (41) aufliegt und dessen andere Fläche sphärisch geformt ist, um den sphärischen Spiegel (31) zu tragen,
- einem dritten Element (43) mit konkaver Form auf einer Seite, um sich auf dem zweiten Element (42) abzustützen, wobei die zweite Seite eben ist und der zweiten Seitenfläche des Plättchens (4) mit parallelen Seiten entspricht,
- und einem vierten Element (44), das die Seitenflächen des Plättchens (4) mit parallelen Seiten verlängert und das so schräg gemäß einem Neigungswinkel abgeschnitten ist, daß die vom Bildgenerator kommende Strahlung senkrecht an dem Plättchen mit parallelen Seiten (4) total reflektiert wird.

4. Vorrichtung nach einem der Ansprüche 1 bis 3, dadurch gekennzeichnet, daß das Plättchen mit parallelen Seiten aus Glas oder einem transparenten Material besteht, das Brechungskennwerte und mechanische Widerstandswerte besitzt, die dem Gebrauchszweck angepaßt sind.

## Claims

1. Visual display device for an ergonomic helmet sight with a large field of observation permitting the viewing of an image from an image generator superimposed on that of an external landscape, including an optical collimating and combining assembly, with the image generator situated on the same side as the point of observation, provided with a holographic or dichroic mirror (31) and with a semi-transparent plane mirror (32) included in a transparent plate (4) with parallel faces, characterized in that the said plate (4) with parallel faces includes in its front face (F₂), on the point of observation side, a bevelled surface (F₃) disposed facing the image generator, in such a way as to be orthogonal to the optical axis of the said image generator and inclined with respect to the rear face (F₁), on the external-scene side, of the transparent plate in such a manner as to permit a total reflection on this rear face of the radiation emanating from the image generator.

2. Device according to Claim 1, characterized in that the axis of the spherical mirror (31) coincides with the sighting axis (Z).

3. Device according to either one of Claims 1 and 2, characterized in that the plate with parallel faces is composed of 4 elements, namely:
- a first element (41), one of the faces of which constitutes a lateral face of the plate (4) with parallel faces and the other face of which, which is plane, is the support of the semi-transparent plane mirror (32);
- a second element (42) bearing on the plane face of the element (41) and the other face of which is of spherical configuration in order to support the spherical mirror (31);
- a third element (43) of concave configuration on one face so as to bear on the element (42) and the second face of which is plane and corresponds to the second lateral face of the plate (4) with parallel face; and
- a fourth element (44) extending the lateral faces of the plate (4) with parallel faces and which is cut in a bevel along an inclination such that it permits the radiation emanating from the image generator to undergo total reflection in the plate (4) with parallel faces.

4. Device according to any one of Claims 1 to 3, characterized in that the plate with parallel faces is composed of a glass or a transparent material possessing the characteristics of refraction and of mechanical strength which are appropriate for the use.
